# EUROPEAN PATENT SPECIFICATION

(11) **EP 4 631 840 B1**
(45) Date of publication and mention of the grant of the patent: **11.11.2026**
(21) Application number: 24169077.5
(22) Date of filing: 08.04.2024
(51) Int. Cl.: B62M 6/60

(54) **HUB ARRANGEMENT**
NABENANORDNUNG
AGENCEMENT DE MOYEU

(43) Date of publication of application: 15.10.2025
(73) Proprietor: Hirschvogel E-Solutions GmbH, 86956 Schongau (DE)
(72) Inventor: Meingassner, Martin, 85625 Baiern-Antholing (DE)
(74) Representative: Krauss, Philipp

(56) References cited:
- TW-B- I 802 444
- US-A1- 2023 382 489
- US-B1- 6 354 980

## Description

### TECHNICAL FIELD

The disclosure relates to a hub arrangement.

### BACKGROUND

Although applicable to any type of vehicle hub, the present disclosure will mainly be described in conjunction with rear hubs for bicycles.

Modern bicycles may be equipped with an electric motor. Such electric motors may e.g., be provided in the rear hub of such a bicycle. In order to drive an electric motor in a rear hub of a bicycle different complex sensors and control electronics are required.

Accordingly, there is a need for providing improved control of electric motors in bicycle hubs. The document US 6 354 980 B1 discloses a hub arrangement in accordance with the preamble of claim 1.

### SUMMARY

The above stated problem is solved by the features of the independent claims. It is understood, that independent claims of a claim category may be formed in analogy to the dependent claims of another claim category.

### Accordingly, it is provided:

A hub arrangement comprising a static hollow shaft arrangement, a first drive arrangement rotatably arranged on the static hollow shaft arrangement, a second drive arrangement arranged rotatably at least in part on or over the first drive arrangement, wherein the second drive arrangement comprises a receiving element, and a drive element, wherein the receiving element is rotatably supported against the drive element with a spring-loaded end stop such that the receiving element may rotate with respect to the drive element about a predetermined angle of rotation. The hub arrangement further comprises a freewheel arrangement that is coupled to the first drive arrangement, and the receiving element of the second drive arrangement, and that allows the receiving element of the second drive arrangement to rotate with regard to the first drive arrangement in a first direction of rotation, and that blocks the receiving element of the second drive arrangement from rotating with regard to the first drive arrangement in a second direction of rotation that is opposite to the first direction of rotation. The hub arrangement further comprises a torque sensor arrangement that comprises a first signaling element arranged on the receiving element, a second signaling element arranged on the drive element, a first sensor configured to sense the first signaling element, and to provide a respective first output signal, a second sensor configured to sense the second signaling element, and to provide a respective second output signal, and a processing unit coupled to the first sensor, and the second sensor, wherein the processing unit is configured to determine a torque transferred via the freewheel arrangement to the receiving element based on the first output signal, and the second output signal, and to output the determined torque.

The present disclosure is based on the finding that known driving system for electric motors in rear hubs for e.g., bicycles, usually use complex sensor and control arrangements. This is due to the requirement to measure a torque that is applied by the drive of the bicycle, and drive the electric motor according to the measured torque.

Known arrangements for measuring a torque in such a rear hub usually comprise rotating sensors that transmit sensor signals wirelessly or that are connected to further control electronics e.g., via a slip ring. Such arrangements are complex to manufacture, and increase the required maintenance efforts.

The present disclosure, therefore, provides a hub arrangement that may be used e.g., as rear hub of a bicycle or as hub or rear hub of any other adequate vehicle, and comprises a simplified construction. When the present disclosure mentions a bicycle, it is understood, that any other adequate vehicle is also possible. Such vehicles include but are not limited to bubble cars, or light quadricycles, or other types of small cars that may move in part by active pedaling or without pedaling. The hub arrangement may also be used in vehicles without an electric motor. The hub arrangement may for example also be used to measure a torque for later evaluation without an electric motor being provided in the hub arrangement. **The** hub arrangement may for example also be used to measure a torque for later evaluation with an electric generator being provided in the hub arrangement; the later may be connected by wire to a hub including an electric motor.

**In** order to provide said simplified construction, the hub arrangement comprises a static hollow shaft arrangement. **The** hollow shaft arrangement may comprise a single element or any number of elements that form a mechanical carrier or carrier element for the hub arrangement.

Further, a first drive arrangement is rotatably installed on the static hollow shaft arrangement. A second drive arrangement is rotatably installed or arranged at least in part on or over the first drive arrangement. The terms on or over in this regard refer to the radial outside of the respective element.

The second drive arrangement comprises two elements, the receiving element, and the drive element that may both rotate with respect to each other about a predetermined angle of rotation. In order to limit the possible angle of rotation, a spring-loaded end stop is provided, that at least in a first direction of rotation limits the possible relative movement between the receiving element, and the drive element. Of course, the end stop may comprise a further element or an additional unit may be provided, that also limits the angle of rotation in a second direction of rotation that is opposite to the first direction of rotation.

The hub arrangement further comprises a freewheel arrangement that is coupled to the first drive arrangement, and the receiving element of the second drive arrangement. With the freewheel arrangement, the receiving element may rotate in the first direction of rotation with regard to the first drive arrangement, and is blocked from rotating with regard to the first drive arrangement in the second direction of rotation. In embodiments, the hub arrangement may be provided without the freewheel arrangement. Such a fixed hub arrangement may still comprise the torque sensor arrangement.

In the hub arrangement, the static hollow shaft arrangement serves for fixing the hub arrangement to an external element, like the frame of a bicycle, especially the rearward-facing fork end of such a frame. The static hollow shaft arrangement may comprise e.g., an accommodation space for an axle, especially a quick-release axle that may fix the hub arrangement to a respective frame. To this end, the static hollow shaft arrangement may comprise a single tube-like element, or any combination of elements, that may form the static hollow shaft arrangement. The static hollow shaft arrangement, as well as the first drive arrangement, the second drive arrangement, and the freewheel arrangement, may, but not necessarily need to, comprise at least in part a cylindrical or a rotationally symmetric body. This does not exclude that single features of the respective arrangement may comprise non-cylindrical or non-rotationally symmetric elements.

With the static hollow shaft arrangement as carrier, the further elements of the hub arrangement may rotationally movably be provided on or around the static hollow shaft arrangement.

The first drive arrangement is rotatably provided on the hollow shaft in order to provide a rotating movement from a drive train of the bicycle to the wheel that uses or carries the hub arrangement. The first drive arrangement may comprise a single element or multiple elements that together may form a kind of sleeve or covering element that may slide onto the static hollow shaft arrangement. The first drive arrangement, when provided as cylindrical element or arrangement, may comprise a plurality of sections in axial direction, each with a different inner and/or outer diameter.

The second drive arrangement is arranged rotatably supported at least in part on the first drive arrangement. It is understood, that every part that is rotatably supported or may rotate around an axis of rotation of the hub arrangement, may be supported by respective bearings directly or indirectly on the static hollow shaft arrangement or any other element of the hub arrangement.

The combination of the first drive arrangement, and the second drive arrangement in combination with the freewheel arrangement serves to allow freewheeling of the wheel that carries or uses the hub arrangement. The second drive arrangement may be the element of the hub arrangement that forwards the rotational movement or force to the outer elements of the wheel, like the spokes, the rim, and the tire. The second drive arrangement may also be the element of the hub arrangement that may be driven by an electric motor, in case that the hub arrangement is used in a hub with an integrated electric motor.

The freewheel arrangement is coupled to the first drive arrangement, and the second drive arrangement i.e., the receiving element, and allows the second drive arrangement to rotate in the first direction of rotation with respect to or relative to the first drive arrangement, and prevents rotation of the second drive arrangement in the opposite, second direction of rotation. The first direction of rotation is the direction of rotation in that the second drive arrangement rotates around the first drive arrangement, when the bicycle is moving forward, while the first drive arrangement is not actively driven to rotate by an external source i.e., when the first drive arrangement is not rotating, or while the first drive arrangement is driven to rotate by an external source slower than the second drive arrangement is rotating due to the speed of the bicycle.

In order to control an electric motor that may be provided in the hub arrangement, the hub arrangement further comprises a torque sensor arrangement.

The torque sensor arrangement comprises a first signaling element that is arranged on the receiving element. Consequently, the first signaling element rotates with the receiving element. A second signaling element is arranged on the drive element. Consequently, the second signaling element rotates with the drive element.

Further, the hub arrangement comprises a first sensor and a second sensor. The first sensor senses the first signaling element, and the second sensor senses the second signaling element. Both sensors provide their output signals to a processing unit.

As explained above, the spring-loaded end stop allows rotation of the receiving element with respect to the drive element within a predetermined angle. Since the spring-loaded end stop provides an active counter force to this relative movement, the processing unit may calculate a torque based on the first output signal from the sensor, and the second output signal from the second sensor.

With the hub arrangement, torque sensing within the hub arrangement is possible with a mechanical and electrical arrangement of low complexity.

Further embodiments of the present disclosure are subject of the further dependent claims and of the following description, referring to the drawings.

In an embodiment, which can be combined with all other embodiments mentioned above or below, the at least one of the first signaling element and the second signaling element may comprise a magnetic element that comprises at least one pair of magnetic poles on a circular path around an axis of rotation of the hub arrangement.

The first signaling element, and the second signaling element may comprise at least one, especially a plurality of pairs of magnetic poles. In an embodiment, the number of pairs of magnetic poles in the first signaling element is equal to the number of pairs of magnetic poles in the second signaling element.

If both signaling elements comprise the same number of magnetic poles, the signals provided by the two sensors may be compared without the need to perform any signal conversions prior to comparing the signals.

In embodiments, while no conversion needs to be performed, a calibration that establishes a reference position between the first signaling element i.e., the receiving element, and the second signaling element i.e., the drive element, may be performed. Such a calibration may be performed at least one of during a factory or end-of-line calibration, and during normal operation of the hub arrangement.

The number of pairs of magnetic poles may range from one to 96, especially from 6 to 64, especially from 12 to 28. **In** an embodiment, the number of pairs of magnetic poles of the first signaling element, and the second signaling element is equal to 23.

In a further embodiment, which can be combined with all other embodiments mentioned above or below, the hub arrangement may further comprise an electric motor configured to drive the second drive arrangement, wherein the electric motor may comprise the same number of pairs of magnetic poles as the second signaling element.

As explained above, the torque sensor arrangement may especially be used in combination with electric motors in the hub arrangement, and especially to control an electric motor based on the measured torque. Usually, the driving force provided by the electric motor will be somehow proportional e.g., linearly proportional, to the torque applied to the hub arrangement. In embodiments, a nonlinearly proportional torque may be generated by the electric motor.

The electric motor, when installed, directly drives the drive element. The second signaling element, consequently, rotates with the same speed as such an electric motor. With the hub arrangement according to the present disclosure, instead of using the back-EMF of the electric motor, the position of the rotor of the electric motor may be directly determined based on the second sensor signal.

Providing the second signaling element with the same number of pairs of magnetic poles, therefore, allows directly using the signal from the second sensor in order to calculate motor control signals without any conversion of this signals.

In another embodiment, which can be combined with all other embodiments mentioned above or below, at least one of the first sensor and the second sensor may comprises a hall sensor.

In embodiments, the first sensor, and the second sensor may both be hall sensors. The first, and second sensors may e.g., both be digital hall sensors that output either a high signal or a low signal, depending on the strength of the magnetic field sensed by the respective sensor. With such sensors, a phase difference may be calculated based on the low-high and high-low level changes.

In embodiments, one or both of the sensors may comprise analog hall sensors. Such analog hall sensors output a continuous signal. While the signaling elements rotate with a constant speed, such hall sensors may output e.g., a sine-like signal. With such sensors, the phase difference may not only be determined at specific events, like the low-high or high-low transitions. Instead, with such analog hall sensors, the phase difference may be continuously detected.

In an alternative hub arrangement, instead of comparing the phases of, and therefore, the displacement between to elements, it is also possible to directly measure the distance of a leaf spring to an end stop element in the spring-loaded end stop (described in more detail below) with a respective sensor. In such a hub arrangement, a multi-pole slip ring or a wireless signal transmission is required to transmit the signal from the sensor to a control unit.

In an embodiment, which can be combined with all other embodiments mentioned above or below, at least one of the first sensor and the second sensor may be directly or indirectly fixed to the static hollow shaft arrangement.

In an embodiment, both, the first sensor, and the second sensor are fixed to the static hollow shaft arrangement.

When fixing the first sensor, and the second sensor to the static hollow shaft arrangement, the processing unit may also be fixed to the static hollow shaft arrangement. In embodiments, the electronic circuitry required for driving the electric motor may also be fixed to the static hollow shaft arrangement.

If the active electronic elements of the hub arrangement are provided on the static hollow shaft arrangement, the electronic elements are not subject to any rotation while the hub arrangement is operating. Consequently, no centrifugal forces are inflicted on the electronic elements.

The sensors may be fixed to the static hollow shaft arrangement directly, or indirectly. For example, the sensors may be provided on one or two printed circuit boards that may be arranged on the static hollow shaft arrangement. By providing the sensors fixed directly or indirectly to the static hollow shaft arrangement, additional elements, like a wireless data transmission or a slip ring are not required to transmit the sensor signals to the processing unit.

In a further embodiment, which can be combined with all other embodiments mentioned above or below, the processing unit may be configured to calculate an angular displacement between the receiving element, and the drive element based on the first output signal, and the second output signal, and to calculate the torque based at least on the angular displacement and the spring force provided by the spring-loaded end stop. Calculating the angular displacement is meant to comprise any method that allows determining the displacement between the receiving element and the drive element. Such a method may also comprise simply outputting a difference of the signal magnitude of the two output signals, or outputting a phase shift or phase difference determined between the two output signals while the hub arrangement is rotating.

As explained above, a rotation of the receiving element with regard to the drive element is allowed within a predetermined angle of rotation. At the same time, the spring-loaded end stop will provide a force between the receiving element, and the drive element, that pushes the receiving element, and the drive element into an initial or predetermined or fixed position. Such a position may be defined by a further end stop element that limits the movement of the receiving element with regard to the drive element in the second direction of rotation.

When a force or torque is applied to the receiving element e.g., by a user that pedals on the bicycle, via a chain or belt, the first drive arrangement, and the freewheel arrangement, the receiving element will rotate with respect to the drive element in the first direction of rotation. At the same time, the spring-loaded end stop will provide a respective counter force, or push the receiving element in the second direction of rotation.

The amount of rotation or the angle of rotation of the receiving element with respect to the drive element in the first direction of rotation, consequently, depends on the amount of torque transferred to the receiving element.

The processing unit may, therefore, easily calculate the torque based on the angular displacement and the knowledge of the spring force provided by the spring-loaded end stop.

Calculating in this regard refers to any method of relating the angular displacement to the respective torque. The processing unit may e.g., at least one of calculate the torque based on a respective formula, and look up the torque in a respective look-up table.

In an embodiment, which can be combined with all other embodiments mentioned above or below, the hub arrangement may further comprise a third signaling element arranged on the first drive arrangement, and a third sensor arranged on the static hollow shaft arrangement, wherein the third sensor may be configured to sense the third signal element, and output a third sensor signal. The processing unit may be further coupled to the third sensor, and may be configured to output a motor clearance signal based at least on the third sensor signal.

The third signaling element with the third sensor may serve to provide an additional safety mechanism. The third signaling element is arranged on the first drive arrangement. This means, that the third signaling element only rotates if it is actively driven from the outside e.g., by the rider of the bicycle via a drive train of the bicycle.

The processing unit may, consequently, use this signal to determine if a driving force is actively applied from the outside to the hub arrangement.

The processing unit may use this knowledge to provide the motor clearance signal only in case that the first drive arrangement is actively driven with the external force. The processing unit may provide the clearance signal e.g., only if the first drive arrangement is actively driven with the same speed as the wheel that uses the hub arrangement is currently rotating. The speed of rotation of the wheel may be determined e.g., based on the second sensor signal.

In a further embodiment, which can be combined with all other embodiments mentioned above or below, the spring-loaded end stop may comprise at least one end stop arrangement comprising an end stop element on the drive element, and a respective spring arranged between the end stop element and the receiving element.

The spring-loaded end stop may comprise one or multiple end stop arrangements. Each one of the end stop arrangements may comprise an end stop element and a respective spring. The end stop element may be provided on the drive element and may determine the limit or the predetermined angle of rotation of the rotation of the receiving element with respect to the drive element.

The spring may in embodiments also be provided on the drive element, and may be provided between the respective end stop element, and the receiving element.

The spring may be configured to push the receiving element in the second direction of rotation i.e., away from the end stop element.

As indicated above, a further end stop element may also be provided e.g., on the drive element to limit rotation of the receiving element with respect to the drive element in the second direction of rotation.

With the end stop element, and the spring, it is possible to easily dimension the angle-dependent force provided by the spring by positioning the end stop element, and the spring accordingly, and by selecting a respective spring with the required parameters.

In an embodiment, which can be combined with all other embodiments mentioned above or below, the spring-loaded end stop may comprise at least two end stop arrangements. The end stop arrangements may be evenly distributed around an axis of rotation of the hub arrangement.

By evenly distributing multiple end stop arrangements around an axis of rotation of the hub arrangement, the forces induced in the hub arrangement are symmetrically, and may easily be absorbed.

In a further embodiment, which can be combined with all other embodiments mentioned above or below, in the at least one end stop arrangement the spring may be a leaf spring, wherein a first end, also called proximal or inner end, of the leaf spring may be arranged nearer to the axis of rotation of the hub arrangement than a second end, also called distal or outer end, of the leaf spring.

Leaf springs comprise a direction or plane of main extension, wherein the main surface of the leaf spring in an unloaded state lies in that direction or plane.

By using leaf springs in the end stop arrangements, and arranging the leaf springs such that they extend essentially in radial direction, allows providing very compact end stop arrangements.

In embodiments, the leaf spring in an unloaded state, in which the leaf spring may extend in a straight line, is arranged to extend in radial direction with regard to the axis of rotation of the hub arrangement. In other embodiments, the spring leaf may be oriented with an angle to the radial direction.

In embodiments, the leaf spring may be fixed on the outer end i.e., the distal end viewed from the axis of rotation of the hub arrangement, to the end stop element. This provides a very simple fixation for the leaf spring.

In an embodiment, which can be combined with all other embodiments mentioned above or below, the receiving element may comprise a protrusion for every spring, wherein the protrusion may be configured to engage with the respective spring. Each one of the springs may be arranged between the respective end stop element and the respective protrusion.

The protrusions may serve as a kind of finger, towing arm, or driving element, that engages with the respective spring. While rotating the receiving element in the first direction of rotation with respect to the drive element, the protrusion will tow or push the spring where the protrusion engages with the respective spring.

Each one of the springs may be configured to separate the respective protrusion from the respective end stop by a predetermined distance if no force is applied to the hub arrangement. A further end stop may be provided for each one of the protrusions in order to set the predetermined distance as required. In the state with the largest rotation in the second direction of rotation, the springs may be unloaded. Alternatively, in that state, the springs may be pre-loaded with a predetermined minimum spring load or force to move the protrusions, and therefore, the receiving element into a predetermined position with regard to the drive element.

In a further embodiment, which can be combined with all other embodiments mentioned above or below, the leaf spring may comprise a single-sheet leaf spring, or a multi-sheet leaf spring.

A single-sheet leaf spring may require a rather thick sheet to provide the required spring forces. When bending such a thick leaf spring, the stress or tension on the surface of the spring may be large.

In order to reduce the stress or tension within the spring, instead of using a single-sheet spring, a multi-sheet leaf spring may be used.

Such a multi-sheet leaf spring allows the sheets to move relative to each other e.g., slide over each other. Such an arrangement, consequently, reduces the shear forces in the spring compared to a single thicker leaf spring.

In an embodiment, which can be combined with all other embodiments mentioned above or below, the end stop element may comprise a spring-facing surface that faces the surface of the leaf spring, wherein the spring-facing surface may be shaped according to the shape of the spring when pressed against the end stop.

This means that the spring-facing surface of the end stop element is shaped according to the spring in the loaded state when the spring is loaded without the end stop element being present. The spring, especially a leaf spring, in the loaded state will have a specific curvature. The spring-facing surface may be shaped to match this curvature. This means, that while the spring is loaded more and more from a non-loaded state, it will gradually lay onto the spring-facing surface of the end stop element.

With known end stops e.g., with cube shaped end stop elements, the spring will hit the end stop element undamped and an audible sound will be generated. In contrast with the hub arrangement according to the present disclosure, by dimensioning or shaping the spring-facing surface of the end stop element such that the spring gradually lays onto the spring-facing surface, a silent end stop is provided that does not lead to any type of audible sound emissions.

In a further embodiment, which can be combined with all other embodiments mentioned above or below, the end stop element may comprise a spring-facing surface that faces the surface of the leaf spring in a minimal loaded state of the leaf spring, wherein the spring-facing surface may be shaped to gradually bend away from the spring leaf with diminishing distance from the axis of rotation of the hub arrangement.

The minimal loaded state of the leaf spring refers to the state of the leaf spring when the receiving element is maximally moved in the second direction with respect to the drive element.

In embodiments, the spring-facing surface of the end stop element away from the spring more than the shape of the loaded spring without the end stop element. In such embodiments, the leaf spring will not bend as if the end stop element would not be present when pressed against the end stop element. Instead, the gradually shaped spring-facing surface will have the effect it gradually serves as a support surface for the leaf spring. Further bending of the leaf spring is, therefore, performed as if the spring was shorter than originally. The force required to bend the leaf spring will, consequently, gradually increase.

### BRIEF DESCRIPTION OF THE DRAWINGS

For a more complete understanding of the present disclosure and advantages thereof, reference is now made to the following description taken in conjunction with the accompanying drawings. The disclosure is explained in more detail below using exemplary embodiments which are specified in the schematic figures of the drawings, in which:
Figure 1 shows a schematic diagram of an embodiment of a hub arrangement according to the present disclosure;
Figure 2 shows a schematic diagram of a further embodiment of a hub arrangement according to the present disclosure;
Figure 3 shows a schematic diagram of another embodiment of a hub arrangement according to the present disclosure;
Figure 4 shows a schematic diagram of a further embodiment of a hub arrangement according to the present disclosure;
Figure 5 shows a schematic diagram of another embodiment of a hub arrangement according to the present disclosure;
Figure 6 shows a schematic diagram of a further embodiment of a hub arrangement according to the present disclosure; and
Figure 7 shows a schematic diagram of a further embodiment of a hub arrangement according to the present disclosure.

In the figures like reference signs denote like elements unless stated otherwise.

### DETAILED DESCRIPTION OF THE DRAWINGS

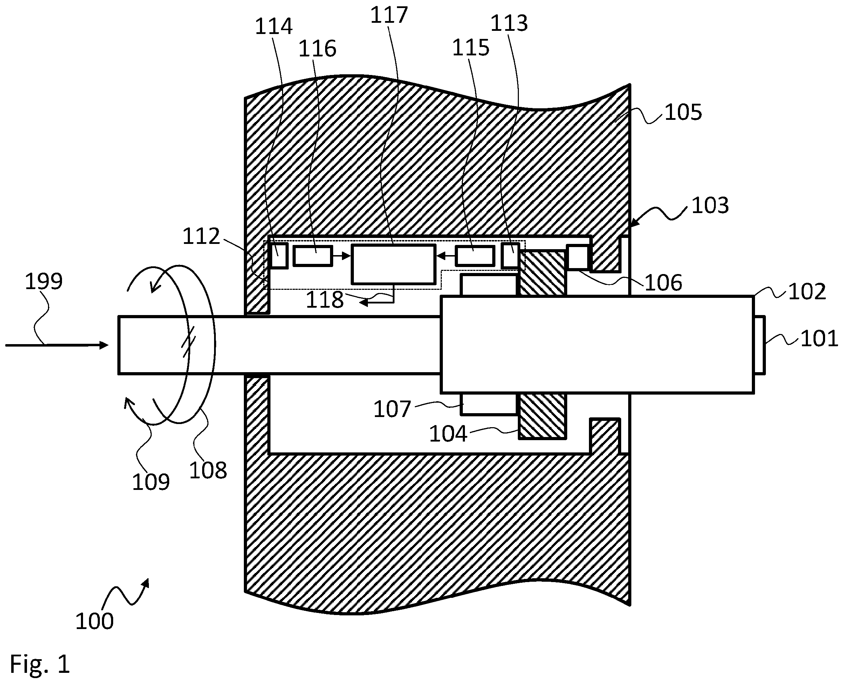

Figure 1 shows a schematic diagram of a hub arrangement 100 in a longitudinal cross-sectional view through the axis of rotation 199 of the hub arrangement 100. The hub arrangement 100 comprises a static hollow shaft arrangement 101, and a first drive arrangement 102 rotatably arranged on the static hollow shaft arrangement 101. A second drive arrangement 103 is arranged rotatably on or over the first drive arrangement 102. The second drive arrangement 103 comprises a receiving element 104, and a drive element 105 that may rotate with respect to or relative to each other only about a predetermined angle of rotation. To this end, the receiving element 104 is supported against the drive element 105 with a spring-loaded end stop 106.

The hub arrangement 100 further comprises a freewheel arrangement 107 coupled to the first drive arrangement 102, and the receiving element 104 of the second drive arrangement 103.

Further, the hub arrangement 100 comprises a torque sensor arrangement 112 that comprises a first signaling element 113 arranged on the receiving element 104, and a second signaling element 114 arranged on the drive element 105. The torque sensor arrangement 112 further comprises a first sensor 115 that senses the first signaling element 113, and provides a respective first output signal. In addition, the torque sensor arrangement 112 comprises a second sensor 116 that senses the second signaling element 114, and provides a respective second output signal.

The torque sensor arrangement 112 further comprises a processing unit 117 that is coupled to the first sensor 115, and the second sensor 116.

During operation of the hub arrangement 100, the freewheel arrangement 107 allows the receiving element 104 to rotate with respect to the first drive arrangement 102 in a first direction of rotation 108. The freewheel arrangement 107 blocks the receiving element 104 from rotating with respect to the first drive arrangement 102 in a second direction of rotation 109 that is opposite to the first direction of rotation 108.

During operation of the hub arrangement 100 the processing unit 117 determines a torque 118 transferred via the freewheel arrangement 107 to the receiving element 104 based on the first output signal, and the second output signal, and outputs the determined torque 118. This indication of the torque 118 may be used e.g., to control an electric motor in the hub arrangement 100.

The first signaling element 113 and the second signaling element 114 may both comprise a magnetic element. Such a magnetic element may comprise at least one pair of magnetic poles on a circular path around the axis of rotation 199 of the hub arrangement 100. In an embodiment, the first signaling element 113 and the second signaling element 114 may both comprise a magnetic pole ring with a plurality of magnetic poles.

Especially with a magnetic first signaling element 113, and a magnetic second signaling element 114, the first sensor 115 and the second sensor 116 may each comprise a hall sensor.

The first sensor 115 and the second sensor 116 may be fixed to the static hollow shaft arrangement 101. In such embodiments, the first sensor 115 and the second sensor 116 will not rotate and will suffer less mechanical stress.

As explained above, the first sensor 115, and the second sensor 116 may be digital hall sensors, or analog hall sensors. Especially, with analog hall sensors the processing unit 117 may determine an angular displacement based on the relative deviation of the signals provided by the first sensor 115, and the second sensor 116. The term "angular displacement" in this regard refers to any value that is somehow i.e., directly, or indirectly, proportional to the relative angular displacement between the first signaling element 113, and the second signaling element 114 i.e., between the receiving element 104, and the drive element 105.

Based on the angular displacement and the spring force provided by the spring-loaded end stop 106 the processing unit 117 may calculate the torque 118 and output a respective signal. Based on the spring force is to be interpreted broadly. For example, based on the spring force may comprise matching the angular displacement to a torque value based on a look-up table, or based on a formula. In other embodiments, the angular displacement may directly be output as the torque 118 since the angular displacement is based on the spring force. Outputting a respective signal in this regard may refer to physically providing a respective signal representing the torque to another element in the hub arrangement 100, or to internally outputting a value representing the torque from a computation function to another function that e.g., controls an electric motor in the hub arrangement 100.

The explanations provided for any one of the embodiments of the hub arrangement apply mutatis mutandis to the hub arrangement 100.

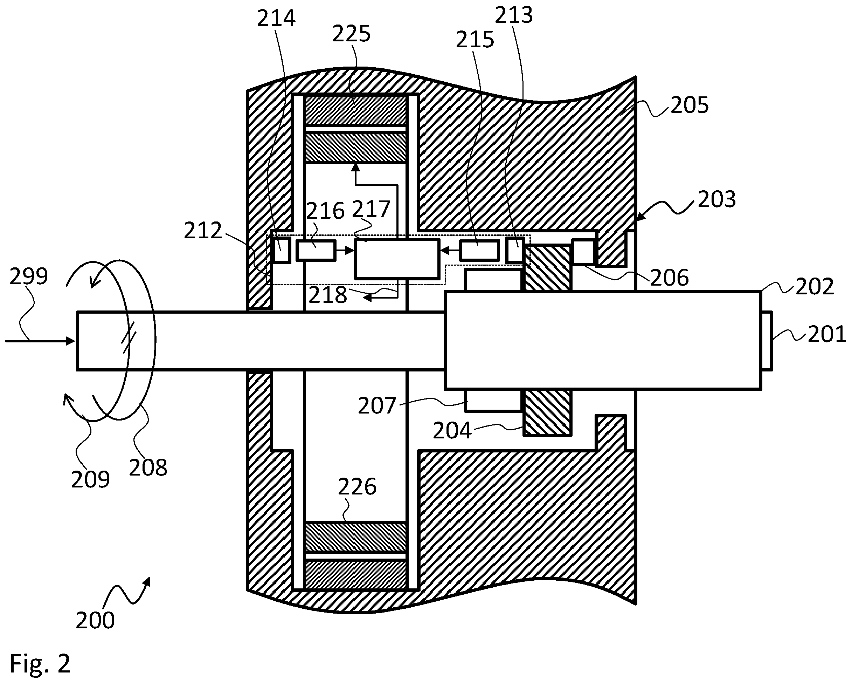

Figure 2 shows a schematic diagram of a hub arrangement 200. The hub arrangement 200 is based on the hub arrangement 100. Therefore, the hub arrangement 200 comprises a static hollow shaft arrangement 201, and a first drive arrangement 202 rotatably arranged on the static hollow shaft arrangement 201. A second drive arrangement 203 is arranged rotatably on or over the first drive arrangement 202. The second drive arrangement 203 comprises a receiving element 204, and a drive element 205 that may rotate with respect to or relative to each other about a predetermined angle of rotation only. To this end, the receiving element 204 is supported against the drive element 205 with a spring-loaded end stop 206. The hub arrangement 200 further comprises a freewheel arrangement 207 coupled to the first drive arrangement 202, and the receiving element 204 of the second drive arrangement 203. Further, the hub arrangement 200 comprises a torque sensor arrangement 212 that comprises a first signaling element 213 arranged on the receiving element 204, and a second signaling element 214 arranged on the drive element 205. The torque sensor arrangement 212 further comprises a first sensor 215 that senses the first signaling element 213, and provides a respective first output signal. In addition, the torque sensor arrangement 212 comprises a second sensor 216 that senses the second signaling element 214, and provides a respective second output signal. A processing unit 217 is coupled to the first sensor 215, and the second sensor 216 to determine a torque 218. The explanations provided for any one of the embodiments of the hub arrangement apply mutatis mutandis to the hub arrangement 100.

Further, the hub arrangement 200 comprises an electric motor configured to drive the second drive arrangement 103 i.e., the drive element 205, and therefore, the outer parts of a wheel carrying the hub arrangement 200. The electric motor is indicated by motor magnets 225, and driving coils 226 that are both arranged in the drive element 205 concentrically around the axis of rotation 299 of the hub arrangement 200. The electric motor may comprise the same number of pairs of magnetic poles as the second signaling element 114.

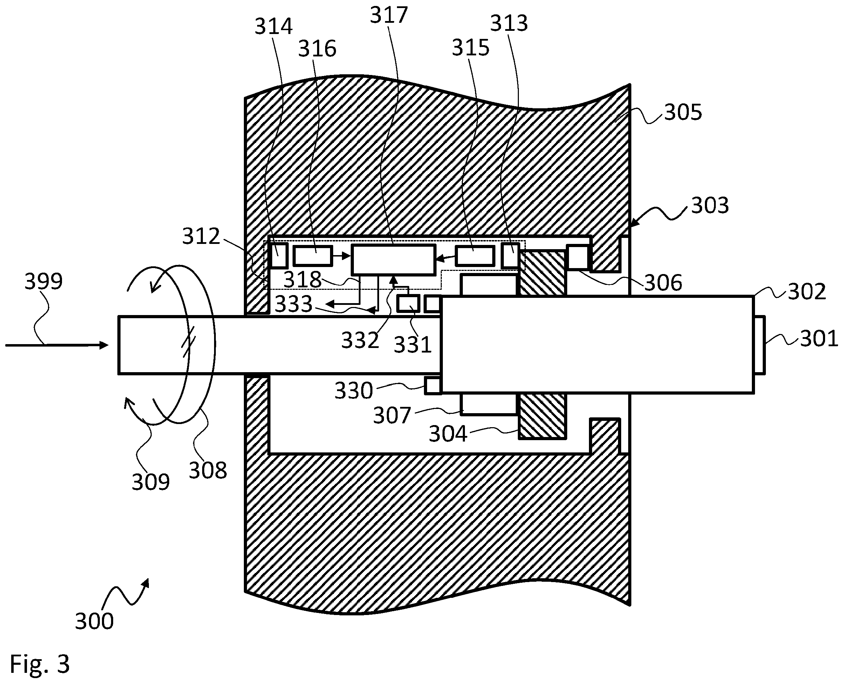

Figure 3 shows a schematic diagram of a hub arrangement 300. The hub arrangement 300 is based on the hub arrangement 100. Therefore, the hub arrangement 300 comprises a static hollow shaft arrangement 301, and a first drive arrangement 302 rotatably arranged on the static hollow shaft arrangement 301. A second drive arrangement 303 is arranged rotatably on or over the first drive arrangement 302. The second drive arrangement 303 comprises a receiving element 304, and a drive element 305 that may rotate with respect to or relative to each other only about a predetermined angle of rotation. To this end, the receiving element 304 is supported against the drive element 305 with a spring-loaded end stop 306. The hub arrangement 300 further comprises a freewheel arrangement 307 coupled to the first drive arrangement 302, and the receiving element 304 of the second drive arrangement 303. Further, the hub arrangement 300 comprises a torque sensor arrangement 312 that comprises a first signaling element 313 arranged on the receiving element 304, and a second signaling element 314 arranged on the drive element 305. The torque sensor arrangement 312 further comprises a first sensor 315 that senses the first signaling element 313, and provides a respective first output signal. In addition, the torque sensor arrangement 312 comprises a second sensor 316 that senses the second signaling element 314, and provides a respective second output signal. A processing unit 317 is coupled to the first sensor 315, and the second sensor 316 to determine a torque 318. The explanations provided for any one of the embodiments of the hub arrangement apply mutatis mutandis to the hub arrangement 300.

The hub arrangement 300 further comprises a third signaling element 330 arranged on the first drive arrangement 302, and a third sensor 331 arranged on the static hollow shaft arrangement 301. The third signaling element 330 rotates with the first drive arrangement 302, while the third sensor 331 is static with the static hollow shaft arrangement 301.

The third sensor 331 senses the third signal element, and outputs a third sensor signal 332. With this third sensor signal 332, the processing unit 317 may determine and output a motor clearance signal 333. The explanations regarding the signal indicating the torque apply mutatis mutandis to the motor clearance signal 333.

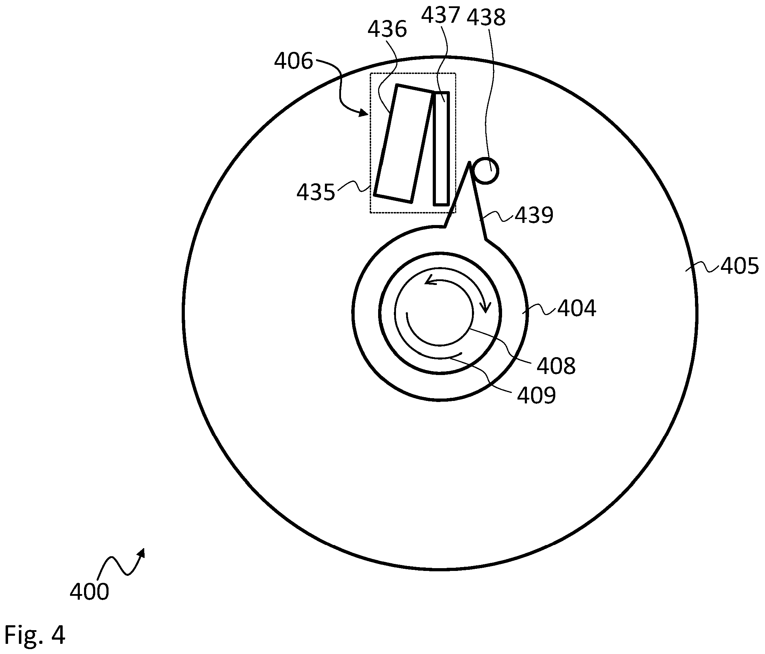

Figure 4 shows a partial diagram of a hub arrangement 400 in a cross-sectional view onto the axis of rotation as shown in figures 1 - 3. The hub arrangement 400 may be a hub arrangement according to any one of the embodiments disclosed herein. The explanations provided for any one of the embodiments of the hub arrangement apply mutatis mutandis to the hub arrangement 400.

The receiving element 404 is rotatably arranged on or with regard to the drive element 405. The receiving element 404 is generally circularly, tube or ring shaped. In the cross-sectional view of figure 4, a protrusion 439 is arranged on the outer edge of the receiving element 404.

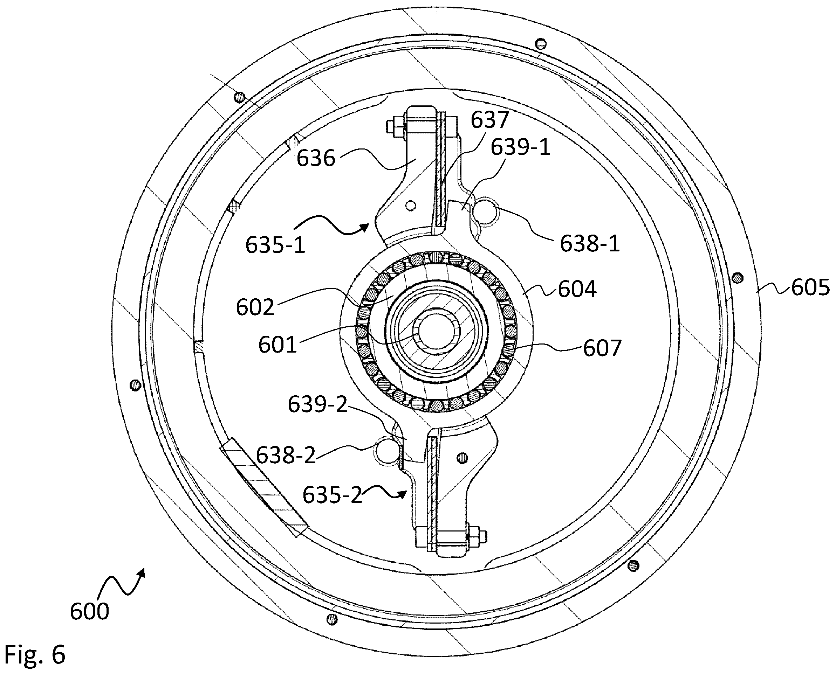

In figure 4, the drive element 405 carries the spring-loaded end stop 406. The spring-loaded end stop 406 comprises a single end stop arrangement 435. As explained above, and as shown with regard to figure 6, multiple end stop arrangements are possible. The end stop arrangement 435 comprises an end stop element 436 together with a respective spring 437. The end stop element 436 is formed in the shape of a rectangular block or cuboid. The spring 437 is a leaf spring with a single leaf that in an unloaded state is arranged straight in radial direction. The distal or outer end of the spring 437 is positioned next to the right distal or outer corner of the end stop element 436.

The end stop element 436 is arranged slightly rotated with regard to the spring 437, resulting in a predetermined distance between the proximal or inner end of the spring 437 from the end stop element 436.

The outer or distal end of the protrusion 439 is situated left of the inner or proximal end of the spring 437. A further end stop element 438 is provided on the drive element 405 right of the outer or distal end of the protrusion 439. The end stop element 438 serves for limiting the movement of the receiving element 404 relative to the drive element 405 in the second direction of rotation.

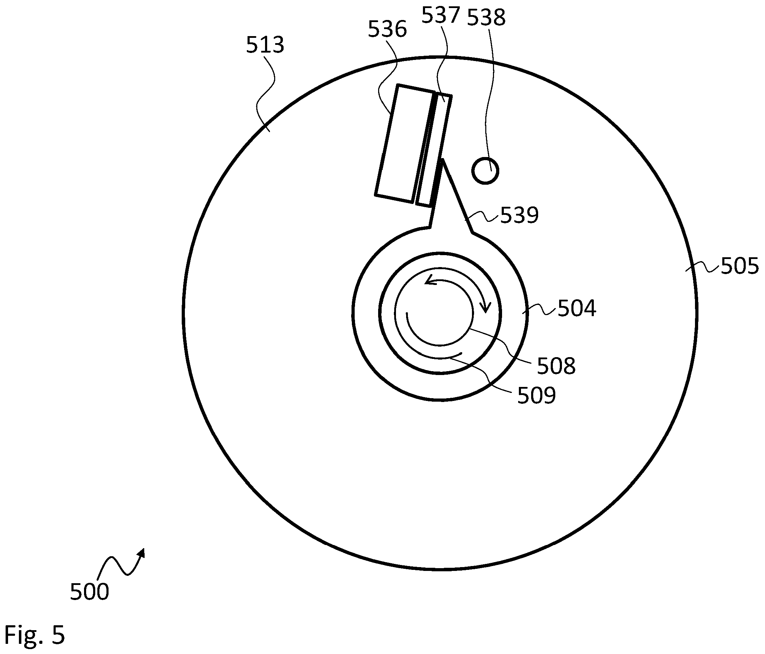

Figure 5 shows a further partial diagram of the hub arrangement 400. In figure 5, the receiving element 404 is rotated in the first direction of rotation 408 with respect to the drive element 405.

Consequently, the spring 437 is bent until it fully lays on the surface of the end stop element 436 that faces the spring 437. The spring 437 will provide a respective counter force or spring force against the protrusions 439

Figures 4 and 5 demonstrate how the processing unit may determine the torque provided from the first drive arrangement to the receiving element 404. In figure 4, the spring 437 is relaxed or unloaded, while no torque is transmitted from the first drive arrangement to the receiving element 404. The first signaling element, and the second signaling element, consequently, comprise a specific shift or angle to each other. In an embodiment with multi-pole magnetic rings as signaling elements, and analog hall sensors as sensors, a specific phase shift will be measured between two sine-like signals provided by the two sensors while the receiving element 404 and the drive element 405 rotate.

In figure 5, the spring 437 is fully loaded or bent because a respective torque is applied to the receiving element 404 via the first drive arrangement.

Consequently, the first signaling element, and the second signaling element comprise a different angle to each other than in figure 4. The phase shift that will be measured between two sine-like signals provided by the two sensors is therefore different than in the situation shown in figure 4. The measured phase shift may be used as a measure for the torque. Alternatively, the measured phase shift may be used as a measure for the angular displacement between the receiving element 404, and the drive element 405, and the torque may be calculated based on the angular displacement and the properties of the spring 437.

In embodiments, any value that directly depends on the displacement between the receiving element 404, and the drive element 405 may be output to a following element, e.g., a motor controller. In an embodiment, the raw data from the two sensors may be output to the motor controller, and the motor controller may be configured to use these signals to control a motor.

Figure 6 partial diagram of a hub arrangement 600 in a cross-sectional view onto the axis of rotation as shown in figures 1 - 3. The hub arrangement 600 may be a hub arrangement according to any one of the embodiments disclosed herein. The explanations provided for any one of the embodiments of the hub arrangement apply mutatis mutandis to the hub arrangement 600.

The hub arrangement 600 comprises a static hollow shaft arrangement 601 arranged around an axis of rotation of the hub arrangement 600. Around the static hollow shaft arrangement 601 a first drive arrangement 602 is provided. The first drive arrangement 602 is linked to the receiving element 604 via a freewheel arrangement 607. The receiving element 604 comprises two protrusions 639-1, 639-2 that are provided on opposite sides of the receiving element 604 i.e., 180° apart from each other. The freewheel arrangement 607 may be provided as a silent freewheel that comprises sprags and rollers in a respective roller cage, as shown in figure 6. In other embodiments, any other type of freewheel system is possible.

The drive element 605 carries two end stop arrangements 635-1, 635-2 that are arranged according to the protrusions 639-1, 639-2. In other embodiments, more than two end stop arrangements are possible. The end stop arrangements may in such embodiments be evenly distributed around the 360° circumference of the receiving element 604.

Further, two additional end stop elements 638-1 638-2 are provided that limit the movement of the receiving element 604 with respect to the first drive arrangement 602 in the second direction of rotation. In the following, only the end stop arrangement 635-1 will be explained in more detail for sake of clarity. The explanations also apply to end stop arrangement 635-2.

The end stop arrangement 635-1 comprises an end stop element 636 and a leaf spring 637. The leaf spring 637 comprises two single leaves or sheets that are stacked or laid on top of each other. The two leaves or sheets of the leaf spring 637 are fixed to the distal or outer end of the end stop element 636 with a screw. While a screw is exemplarily shown as fixing element for the leaf spring 637, any other method may also be used.

The spring-facing surface or side of the end stop element 636 is shaped according to the shape or form that the leaf spring 637 would assume if bent without the spring-facing surface or side of the end stop element 636 being present.

As explained above, this shape of the spring-facing surface or side of the end stop element 636 provides for a silent end stop.

The range of movement of the protrusions 639-1, 639-2, and, therefore, also the range of distortion of the leaf spring 637 may be limited to a range between 0,1° (degree) and 8° (degrees), in particular to a range between 0,3° (degrees) and 6° (degrees), in particular to a range between 1,5° (degree) and 5° (degrees) or to a range in between 0,2 mm and 8 mm, in particular to a range in between 0,5 mm and 5 mm, in particular to a range in between 0,8 mm and 3 mm. The range of movement can be measured at a radius of between 15 mm and 50 mm, in particular at a radius of between 25 mm and 40 mm, in particular at a radius of 36 mm.

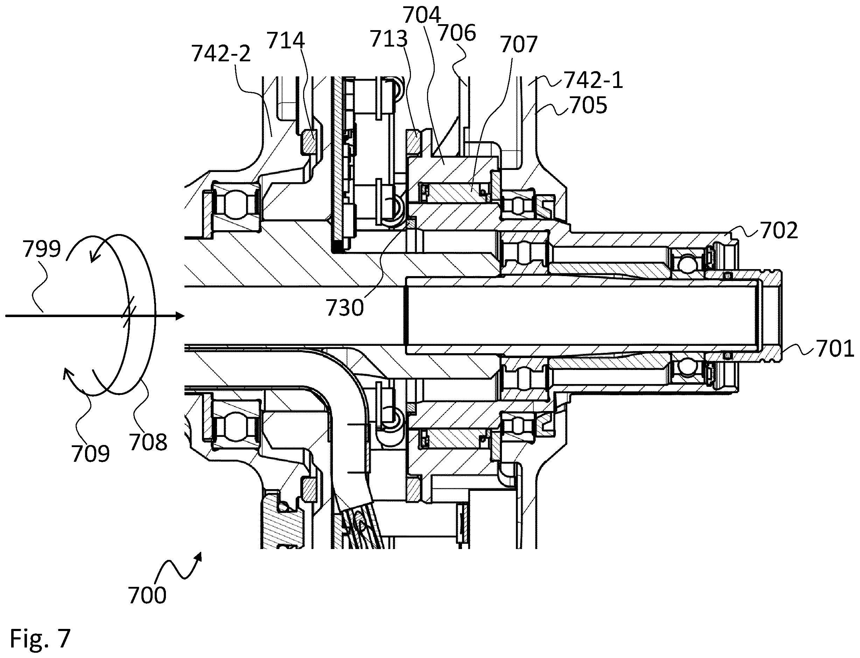

Figure 7 shows a schematic diagram of a hub arrangement 700 in a cross-sectional view. The hub arrangement 700 is a more specific embodiment of the hub arrangement 100. Therefore, the hub arrangement 700 comprises a static hollow shaft arrangement 701 that is positioned in the center of the hub arrangement 700. The hub arrangement 700 further comprises a first drive arrangement 702 rotatably arranged on the static hollow shaft arrangement 701, and a second drive arrangement that comprises a receiving element 704, and a drive element 705. The hub arrangement 700 further comprises a freewheel arrangement 707 arranged between the first drive arrangement 702 and the receiving element 704 of the second drive arrangement. The freewheel arrangement 707 allows rotation of the receiving element 704 on the first drive arrangement 702 in a first direction of rotation 708, and blocks rotation of the receiving element 704 on the first drive arrangement 702 in a second direction of rotation 709 that is opposite to the first direction of rotation 708. The explanations provided herein regarding any one of the embodiments of the hub arrangement apply mutatis mutandis to the hub arrangement 700.

In the hub arrangement 700, the second drive arrangement extends to cover the static hollow shaft arrangement 701 and comprises a wall 742-1 on the right end, and a wall 742-2 on the left end of the static hollow shaft arrangement 701. The second drive arrangement, consequently, forms a kind of hollow space between the two walls 742-1, 742-2. In the hub arrangement 700 further elements (not explicitly referenced) are shown in this hollow space. These elements may be electronic or electrical elements, like a sensor for acquiring a signal from the signaling element 730, and further elements for driving an electric motor, and the electric motor.

In the hub arrangement 700, the first drive arrangement 702 carries a signaling element 730 on the inward-facing end face. The signaling element 730 may comprise a multi-pole magnetic ring or disc. The receiving element 704 carries the first signaling element 713, and the outer wall 742-2 carries the second signaling element 714.

Although not explicitly explained, a plurality of additional elements, like bearings, and seals are present in the hub arrangement 700. It is understood, that any such elements may be provided as required.

With the hub arrangement 700 it is easily possible to provide all required electronic elements, especially active electronic elements, like sensors and controllers statically on the static hollow shaft arrangement.

The processes, methods, or algorithms disclosed herein can be deliverable to/implemented by a processing device, controller, or computer, which can include any existing programmable electronic control unit or dedicated electronic control unit. Similarly, the processes, methods, or algorithms can be stored as data and instructions executable by a controller or computer in many forms including, but not limited to, information permanently stored on non-writable storage media such as ROM devices and information alterably stored on writeable storage media such as floppy disks, magnetic tapes, CDs, RAM devices, and other magnetic and optical media. The processes, methods, or algorithms can also be implemented in a software executable object. Alternatively, the processes, methods, or algorithms can be embodied in whole or in part using suitable hardware components, such as Application Specific Integrated Circuits (ASICs), Field-Programmable Gate Arrays (FPGAs), state machines, controllers or other hardware components or devices, or a combination of hardware, software and firmware components.

With regard to the processes, systems, methods, heuristics, etc. described herein, it should be understood that, although the steps of such processes, etc. have been described as occurring according to a certain ordered sequence, such processes could be practiced with the described steps performed in an order other than the order described herein. It further should be understood that certain steps could be performed simultaneously, that other steps could be added, or that certain steps described herein could be omitted.

All terms used in the claims are intended to be given their broadest reasonable constructions and their ordinary meanings as understood by those knowledgeable in the technologies described herein unless an explicit indication to the contrary in made herein. In particular, use of the singular articles such as "a," "the," "said," etc. should be read to recite one or more of the indicated elements unless a claim recites an explicit limitation to the contrary.

### LIST OF REFERENCE SIGNS

- 100, 200, 300, 400, 600, 700: hub arrangement
- 101, 201, 301, 601, 701: static hollow shaft arrangement
- 102, 202, 302, 602, 702: first drive arrangement
- 103, 203, 303: second drive arrangement
- 104, 204, 304, 404, 604, 704: receiving element
- 105, 205, 305, 405, 605, 705: drive element
- 106, 206, 306, 406, 706: spring-loaded end stop
- 107, 207, 307, 607, 707: freewheel arrangement
- 108, 208, 308, 408, 708: first direction of rotation
- 109, 209, 309, 409, 709: second direction of rotation
- 112, 212, 312: torque sensor arrangement
- 113, 213, 313, 713: first signaling element
- 114, 214, 314, 714: second signaling element
- 115, 215, 315: first sensor
- 116, 216, 316: second sensor
- 117, 217, 317: processing unit
- 118, 218, 318: torque

- 225: motor magnets
- 226: driving coils

- 330, 730: third signaling element
- 331: third sensor
- 332: third sensor signal
- 333: clearance signal

- 435, 635-1, 635-2: end stop arrangement
- 436, 636: end stop element
- 437, 637: spring
- 438, 638: end stop element
- 439, 639-1, 639-2: protrusion

- 742-1, 742-2: wall
- 199, 299, 399: axis of rotation

## Claims

1. Hub arrangement (100, 200, 300, 400, 600, 700) comprising:
a static hollow shaft arrangement (101, 201, 301, 601, 701);
a first drive arrangement (102, 202, 302, 602, 702) rotatably arranged on the static hollow shaft arrangement (101, 201, 301, 601, 701);
a second drive arrangement (103, 203, 303) arranged rotatably on the first drive arrangement (102, 202, 302, 602, 702), wherein the second drive arrangement (103, 203, 303) comprises a receiving element (104, 204, 304, 404, 604, 704), and a drive element (105, 205, 305, 405, 605, 705), wherein the receiving element (104, 204, 304, 404, 604, 704) is rotatably supported against the drive element (105, 205, 305, 405, 605, 705) with a spring-loaded end stop (106, 206, 306, 406, 706) such that the receiving element (104, 204, 304, 404, 604, 704) may rotate with respect to the drive element (105, 205, 305, 405, 605, 705) about a predetermined angle of rotation; and
a freewheel arrangement (107, 207, 307, 607, 707) that is coupled to the first drive arrangement (102, 202, 302, 602, 702), and the receiving element (104, 204, 304, 404, 604, 704) of the second drive arrangement (103, 203, 303), and that allows the receiving element (104, 204, 304, 404, 604, 704) of the second drive arrangement (103, 203, 303) to rotate with regard to the first drive arrangement (102, 202, 302, 602, 702) in a first direction of rotation (108, 208, 308, 408, 708), and that blocks the receiving element (104, 204, 304, 404, 604, 704) of the second drive arrangement (103, 203, 303) from rotating with regard to the first drive arrangement (102, 202, 302, 602, 702) in a second direction of rotation (109, 209, 309, 409, 709) that is opposite to the first direction of rotation (108, 208, 308, 408, 708); and
**characterised in that**
a torque sensor arrangement (112, 212, 312) that comprises:
a first signaling element (113, 213, 313, 713) arranged on the receiving element (104, 204, 304, 404, 604, 704);
a second signaling element (114, 214, 314, 714) arranged on the drive element (105, 205, 305, 405, 605, 705);
a first sensor (115, 215, 315) configured to sense the first signaling element (113, 213, 313, 713), and provide a respective first output signal;
a second sensor (116, 216, 316) configured to sense the second signaling element (114, 214, 314, 714), and provide a respective second output signal; and
a processing unit (117, 217, 317) coupled to the first sensor (115, 215, 315), and the second sensor (116, 216, 316), wherein the processing unit (117, 217, 317) is configured to determine a torque (118, 218, 318) transferred via the freewheel arrangement (107, 207, 307, 607, 707) to the receiving element (104, 204, 304, 404, 604, 704) based on the first output signal, and the second output signal, and to output the determined torque (118, 218, 318).

2. Hub arrangement (100, 200, 300, 400, 600, 700) according to claim 1, wherein at least one of the first signaling element (113, 213, 313, 713) and the second signaling element (114, 214, 314, 714) comprises a magnetic element that comprises at least one pair of magnetic poles on a circular path around a axis of rotation of the hub arrangement (100, 200, 300, 400, 600, 700).

3. Hub arrangement (100, 200, 300, 400, 600, 700) according to claim 2, further comprising an electric motor configured to drive the second drive arrangement (103, 203, 303), wherein the electric motor comprises the same number of pairs of magnetic poles as the second signaling element (114, 214, 314, 714).

4. Hub arrangement (100, 200, 300, 400, 600, 700) according to any one of claims 2 and 3, wherein at least one of the first sensor (115, 215, 315) and the second sensor (116, 216, 316) comprises a hall sensor.

5. Hub arrangement (100, 200, 300, 400, 600, 700) according to any one of the preceding claims, wherein at least one of the first sensor (115, 215, 315) and the second sensor (116, 216, 316) is fixed to the static hollow shaft arrangement (101, 201, 301, 601, 701).

6. Hub arrangement (100, 200, 300, 400, 600, 700) according to any one of the preceding claims, wherein the processing unit (117, 217, 317) is configured to calculate an angular displacement between the receiving element (104, 204, 304, 404, 604, 704), and the drive element (105, 205, 305, 405, 605, 705) based on the first output signal, and the second output signal, and to calculate the torque (118, 218, 318) based at least on the angular displacement and the spring force provided by the spring-loaded end stop (106, 206, 306, 406, 706).

7. Hub arrangement (100, 200, 300, 400, 600, 700) according to any one of the preceding claims, further comprising a third signaling element (330, 730) arranged on the first drive arrangement (102, 202, 302, 602, 702); and
a third sensor (331) arranged on the static hollow shaft arrangement (101, 201, 301, 601, 701), wherein the third sensor (331) is configured to sense the third signal element, and output a third sensor signal (332);
wherein the processing unit (117, 217, 317) is further coupled to the third sensor (331), and is configured to output a motor clearance signal (333) based at least on the third sensor signal (332).

8. Hub arrangement (100, 200, 300, 400, 600, 700) according to any one of the preceding claims, wherein the spring-loaded end stop (106, 206, 306, 406, 706) comprises at least one end stop arrangement (435, 635-1, 635-2) comprising an end stop element (436, 636) on the drive element (105, 205, 305, 405, 605, 705), and a respective spring arranged between the end stop element (436, 636) and the receiving element (104, 204, 304, 404, 604, 704).

9. Hub arrangement (100, 200, 300, 400, 600, 700) according to claim 8, wherein the spring-loaded end stop (106, 206, 306, 406, 706) comprises at least two end stop arrangements (435, 635-1, 635-2); and
wherein the end stop arrangements (435, 635-1, 635-2) are evenly distributed around an axis of rotation of the hub arrangement (100, 200, 300, 400, 600, 700).

10. Hub arrangement (100, 200, 300, 400, 600, 700) according to any one of the preceding claims 8 and 9, wherein in the at least one end stop arrangement (435, 635-1, 635-2) the spring is a leaf spring, wherein a first end of the leaf spring is nearer to the axis of rotation of the hub arrangement (100, 200, 300, 400, 600, 700) than a second end of the leaf spring.

11. Hub arrangement (100, 200, 300, 400, 600, 700) according to claim 10, wherein the receiving element (104, 204, 304, 404, 604, 704) comprises a protrusion (439, 639-1, 639-2) for every spring, wherein the protrusion (439, 639-1, 639-2) is configured to engage with the respective spring, and
wherein each one of the springs is arranged between the respective end stop element (436, 636) and the respective protrusion (439, 639-1, 639-2).

12. Hub arrangement (100, 200, 300, 400, 600, 700) according to any one of the preceding claims 10 and 11, wherein the leaf spring comprises a single-sheet leaf spring, or a multi-sheet leaf spring.

13. Hub arrangement (100, 200, 300, 400, 600, 700) according to any one of the preceding claims 10 to 12, wherein the end stop element (436, 636) comprises a spring-facing surface that faces the surface of the leaf spring, wherein the spring-facing surface is shaped according to the shape of the spring when pressed against the end stop.

14. Hub arrangement (100, 200, 300, 400, 600, 700) according to any one of the preceding claims 10 to 13, wherein the end stop element (436, 636) comprises a spring-facing surface that faces the surface of the leaf spring in a minimal loaded state of the leaf spring, wherein the spring-facing surface is shaped to gradually bend away from the spring leaf with diminishing distance from the axis of rotation of the hub arrangement (100, 200, 300, 400, 600, 700).

## Patentansprüche

1. Nabenanordnung (100, 200, 300, 400, 600, 700), umfassend:
eine statische Hohlwellenanordnung (101, 201, 301, 601, 701);
eine erste Antriebsanordnung (102, 202, 302, 602, 702), die drehbar an der statischen Hohlwelle (101, 201, 301, 601, 701) angeordnet ist;
eine zweite Antriebsanordnung (103, 203, 303), die durch Drehung an der ersten Antriebsanordnung (102, 202, 302, 602, 702) angeordnet ist, wobei die zweite Antriebsanordnung (103, 203, 303) ein Aufnahmeelement (104, 204, 304, 404, 604, 704) und ein Antriebselement (105, 205, 305, 405, 605, 705) umfasst, wobei das Aufnahmeelement (104, 204, 304, 404, 604, 704) drehbar am Antriebselement (105, 205, 305, 405, 605, 705) gelagert ist, mit einem federbelasteten Endanschlag (106, 206, 306, 406, 706) drehbar am Antriebselement (105, 205, 305, 405, 605, 705) gelagert ist, so dass sich das Aufnahmeelement (104, 204, 304, 404, 604, 704) relativ zum Antriebselement (105, 205, 305, 405, 605, 705) um einen vorbestimmten Winkel der Drehung drehen kann; und
eine Freilaufanordnung (107, 207, 307, 607, 707), die mit der ersten Antriebsanordnung (102, 202, 302, 602, 702) und einem Aufnahmeelement (104, 204, 304, 404, 604, 704) der zweiten Antriebsanordnung (103, 203, 303) gekoppelt ist, wobei die Freilaufanordnung dazu ausgelegt ist, dem Aufnahmeelement (104, 204, 304, 404, 604, 704) der zweiten Antriebsanordnung (103, 203, 303) eine Drehung relativ zur ersten Antriebsanordnung (102, 202, 302, 602, 702) in einer ersten Drehrichtung (108, 208, 308, 408, 708) zu ermöglichen und das Aufnahmeelement (104, 204, 304, 404, 604, 704) der zweiten Antriebsanordnung (103, 203, 303) daran zu hindern, sich relativ zur ersten Antriebsanordnung (102, 202, 302, 602, 702) in einer zweiten Drehrichtung (109, 209, 309, 409, 709), die der ersten Drehrichtung (108, 208, 308, 408, 708) entgegengesetzt ist, zu drehen; **dadurch gekennzeichnet, dass**
die Vorrichtung eine Anordnung zum Erfassen des Drehmoments (112, 212, 312) umfasst, aufweisend:
ein erstes Signalelement (113, 213, 313, 713), welches am Aufnahmeelement (104, 204, 304, 404, 604, 704) angeordnet ist;
ein zweites Signalelement (114, 214, 314, 714), welches am Antriebselement (105, 205, 305, 405, 605, 705) angeordnet ist;
einen ersten Initiator (115, 215, 315), der so konfiguriert ist, dass er das erste Signalelement (113, 213, 313, 713) erfasst und ein entsprechendes erstes Ausgangssignal liefert;
einen zweiten Initiator (116, 216, 316), der so konfiguriert ist, dass er das zweite Signalelement (114, 214, 314, 714) erfasst und ein entsprechendes zweites Ausgangssignal liefert; und
eine Verarbeitungseinheit (117, 217, 317), die mit dem ersten Initiator (115, 215, 315) und dem zweiten Initiator (116, 216, 316) gekoppelt ist, wobei die Verarbeitungseinheit (117, 217, 317) so konfiguriert ist, dass ein Drehmoment (118, 218, 318) über die Freilaufanordnung (107, 207, 307, 607, 707) auf das Aufnahmeelement (104, 204, 304, 404, 604, 704) übertragen wird, auf der Grundlage des ersten Ausgangssignals und des zweiten Ausgangssignals zu bestimmen und das bestimmte Drehmoment (118, 218, 318) auszugeben.

2. Nabe (100, 200, 300, 400, 600, 700) nach Anspruch 1, wobei mindestens eines der ersten Signalelemente (113, 213, 313, 713) und der zweiten Signalelemente (114, 214, 314, 714) ein magnetisches Element umfasst, das mindestens ein Paar von Magnetpolen auf einem Weg um eine Drehachse der Nabenanordnung (100, 200, 300, 400, 600, 700) aufweist.

3. Nabenanordnung (100, 200, 300, 400, 600, 700) nach Anspruch 2, ferner umfassend einen Elektromotor, der zum Antreiben der zweiten Antriebsanordnung (103, 203, 303) ausgelegt ist, wobei der Elektromotor die gleiche Anzahl von Magnetpolpaaren aufweist wie das zweite Signalelement (114, 214, 314, 714).

4. Nabe (100, 200, 300, 400, 600, 700) nach einem der Ansprüche 2 und 3, wobei mindestens einer der ersten Initiatoren (115, 215, 315) und der zweiten Initiatoren (116, 216, 316) einen Hall-Sensor umfasst.

5. Nabenanordnung (100, 200, 300, 400, 600, 700) nach einem der vorstehenden Ansprüche, wobei mindestens einer der ersten Initiatoren (115, 215, 315) und der zweiten Initiatoren (116, 216, 316) an der statischen Hohlwelle (101, 201, 301, 601, 701) befestigt ist.

6. Nabenanordnung (100, 200, 300, 400, 600, 700) gemäß einem der vorstehenden Ansprüche, wobei die Verarbeitungseinheit (117, 217, 317) so konfiguriert ist, eine Winkelverschiebung zwischen dem Aufnahmeelement (104, 204, 304, 404, 604, 704) und dem Antriebselement (105, 205, 305, 405, 605, 705) auf der Grundlage des ersten Ausgangssignals und des zweiten Ausgangssignals zu berechnen und das Drehmoment (118, 218, 318) zumindest auf der Grundlage der Winkelverschiebung und der durch den federbelasteten Endanschlag (106, 206, 306, 406, 706) bereitgestellten Federkraft zu berechnen.

7. Nabenanordnung (100, 200, 300, 400, 600, 700) nach einem der vorstehenden Ansprüche, ferner umfassend ein drittes Signalelement (330, 730), das an der ersten Antriebsanordnung (102, 202, 302, 602, 702) angeordnet ist; und
einen dritten Sensor (331), der an der statischen Hohlwellenanordnung (101, 201, 301, 601, 701) angeordnet ist, wobei der dritte Sensor (331) so konfiguriert ist, dass er das dritte Signalelement erfasst und ein drittes Sensorsignal (332) ausgibt;
wobei das Aggregat (117, 217, 317) ferner mit dem dritten Sensor (331) gekoppelt ist und so konfiguriert ist, dass es ein Motor-Spielsignal (333) ausgibt, das zumindest auf dem dritten Sensorsignal (332) basiert.

8. Nabenanordnung (100, 200, 300, 400, 600, 700) gemäß einem der vorstehenden Ansprüche, wobei der federbelastete Endanschlag (106, 206, 306, 406, 706) mindestens eine Endanschlaganordnung (435, 635-1, 635-2) umfasst, die ein Endanschlagelement (436, 636) am Antriebselement (105, 205, 305, 405, 605, 705) und eine jeweilige Feder umfasst, die zwischen dem Endanschlagelement (436, 636) und dem Aufnahmeelement (104, 204, 304, 404, 604, 704) angeordnet ist.

9. Nabenanordnung (100, 200, 300, 400, 600, 700) nach Anspruch 8, wobei der federbelastete Endanschlag (106, 206, 306, 406, 706) mindestens zwei Endanschlag-Anordnungen (435, 635-1, 635-2) umfasst; und
wobei die Endanschlag-Anordnungen (435, 635-1, 635-2) gleichmäßig um eine Drehachse der Nabenanordnung (100, 200, 300, 400, 600, 700) verteilt sind.

10. Nabenanordnung (100, 200, 300, 400, 600, 700) gemäß einem der vorstehenden Ansprüche 8 und 9, wobei in mindestens einer Endanschlaganordnung (435, 635-1, 635-2) die Feder eine Blattfeder ist, wobei ein erstes Ende der Blattfeder näher an der Drehachse der Nabenanordnung (100, 200, 300, 400, 600, 700) liegt als ein zweites Ende der Blattfeder.

11. Nabenanordnung (100, 200, 300, 400, 600, 700) nach Anspruch 10, wobei das Aufnahmeelement (104, 204, 304, 404, 604, 704) für jede Feder einen Vorsprung (439, 639-1, 639-2) für jede Feder aufweist, wobei der Vorsprung (439, 639-1, 639-2) so ausgebildet ist, dass er mit der jeweiligen Feder in Eingriff kommt; und
wobei jede der Federn zwischen dem jeweiligen Endanschlagelement (436, 636) und dem jeweiligen Vorsprung (439, 639-1, 639-2) angeordnet ist.

12. Nabenanordnung (100, 200, 300, 400, 600, 700) gemäß einem der vorstehenden Ansprüche 10 und 11, wobei die Blattfeder eine einlagige Blattfeder oder eine mehrlagige Blattfeder umfasst.

13. Nabenanordnung (100, 200, 300, 400, 600, 700) nach einem der vorstehenden Ansprüche 10 bis 12, wobei das Endanschlagelement (436, 636) eine der Feder zugewandte Fläche aufweist, die der Oberfläche der Blattfeder zugewandt ist, wobei die der Feder zugewandte Fläche entsprechend der Kontur der Feder gestaltet ist, wenn diese gegen den Endanschlag gedrückt wird.

14. Nabenanordnung (100, 200, 300, 400, 600, 700) gemäß einem der vorstehenden Ansprüche 10 bis 13, wobei das Endanschlagelement (436, 636) eine der Feder zugewandte Fläche aufweist, die der Oberfläche der Blattfeder in einem minimal belasteten Zustand der Blattfeder zugewandt ist, wobei die der Feder zugewandte Fläche so geformt ist, dass sie sich mit abnehmendem Abstand von der Rotationsachse der Nabenanordnung (100, 200, 300, 400, 600, 700) allmählich von der Federblatt wegbiegt.

## Revendications

1. Agencement de moyeu (100, 200, 300, 400, 600, 700) comprenant :
un ensemble d'arbre creux statique (101, 201, 301, 601, 701) ;
un premier dispositif d'entraînement (102, 202, 302, 602, 702) monté de manière rotative sur l'ensemble d'arbre creux statique (101, 201, 301, 601, 701) ;
un deuxième dispositif d'entraînement (103, 203, 303) monté de manière rotative sur le premier dispositif d'entraînement (102, 202, 302, 602, 702), dans lequel le deuxième dispositif d'entraînement (103, 203, 303) comprend un élément de réception (104, 204, 304, 404, 604, 704) et un élément d'entraînement (105, 205, 305, 405, 605, 705), l'élément de réception (104, 204, 304, 404, 604, 704) est supporté de manière rotative contre l'élément d'entraînement (105, 205, 305, 405, 605, 705) avec une butée d'extrémité à ressort (106, 206, 306, 406, 706) de telle sorte que l'élément récepteur (104, 204, 304, 404, 604, 704) puisse tourner par rapport à l'élément d'entraînement (105, 205, 305, 405, 605, 705) d'un angle de rotation prédéterminé ; et
un dispositif de roue libre (107, 207, 307, 607, 707) qui est couplé au premier dispositif d'entraînement (102, 202, 302, 602, 702), et l'élément récepteur (104, 204, 304, 404, 604, 704) du deuxième dispositif d'entraînement (103, 203, 303), et qui permet à l'élément récepteur (104, 204, 304, 404, 604, 704) du deuxième dispositif d'entraînement (103, 203, 303) de tourner par rapport au premier dispositif d'entraînement (102, 202, 302, 602, 702) dans un premier sens de rotation (108, 208, 308, 408, 708), et qui empêche l'élément récepteur (104, 204, 304, 404, 604, 704) du deuxième dispositif d'entraînement (103, 203, 303) de tourner par rapport au premier dispositif d'entraînement (102, 202, 302, 602, 702) dans un deuxième sens de rotation (109, 209, 309, 409, 709) opposé au premier sens de rotation (108, 208, 308, 408, 708) ; et **caractérisé en ce que**
un dispositif de capteur de couple (112, 212, 312) qui comprend :
un premier élément de signalisation (113, 213, 313, 713) disposé sur l'élément récepteur (104, 204, 304, 404, 604, 704) ;
un deuxième élément de signalisation (114, 214, 314, 714) disposé sur l'élément d'entraînement (105, 205, 305, 405, 605, 705) ;
un premier capteur (115, 215, 315) configuré pour détecter le premier élément de signalisation (113, 213, 313, 713) et fournir un premier signal de sortie correspondant ;
un deuxième capteur (116, 216, 316) configuré pour détecter le deuxième élément de signalisation (114, 214, 314, 714) et fournir un deuxième signal de sortie correspondant ; et
une unité de traitement (117, 217, 317) reliée au premier capteur (115, 215, 315) et au deuxième capteur (116, 216, 316), dans laquelle l'unité de traitement (117, 217, 317) est configurée pour déterminer un couple (118, 218, 318) transféré via le dispositif de roue libre (107, 207, 307, 607, 707) à l'élément récepteur (104, 204, 304, 404, 604, 704) sur la base du premier signal de sortie et du deuxième signal de sortie, et à fournir en sortie le couple déterminé (118, 218, 318).

2. Agencement de moyeu (100, 200, 300, 400, 600, 700) selon la revendication 1, dans lequel au moins l'un parmi le premier élément de signalisation (113, 213, 313, 713) et le deuxième élément de signalisation (114, 214, 314, 714) comprend un élément magnétique qui comporte au moins une paire de pôles magnétiques sur un trajet circulaire autour d'un axe de rotation de l'agencement de moyeu (100, 200, 300, 400, 600, 700).

3. Agencement de moyeu (100, 200, 300, 400, 600, 700) selon la revendication 2, comprenant en outre un moteur électrique configuré pour entraîner le deuxième dispositif d'entraînement (103, 203, 303), dans lequel le moteur électrique comprend le même nombre de paires de pôles magnétiques que le deuxième élément de signalisation (114, 214, 314, 714).

4. Agencement de moyeu (100, 200, 300, 400, 600, 700) selon l'une quelconque des revendications 2 et 3, dans lequel au moins l'un parmi le premier capteur (115, 215, 315) et le deuxième capteur (116, 216, 316) comprend un capteur à effet Hall.

5. Agencement de moyeu (100, 200, 300, 400, 600, 700) selon l'une quelconque des revendications précédentes, dans lequel au moins l'un parmi le premier capteur (115, 215, 315) et le deuxième capteur (116, 216, 316) est fixé à l'agencement d'arbre creux statique (101, 201, 301, 601, 701).

6. Agencement de moyeu (100, 200, 300, 400, 600, 700) selon l'une quelconque des revendications précédentes, dans lequel l'unité de traitement (117, 217, 317) est configurée pour calculer un déplacement angulaire entre l'élément récepteur (104, 204, 304, 404, 604, 704) et l'élément d'entraînement (105, 205, 305, 405, 605, 705) sur la base du premier signal de sortie de l' , et du deuxième signal de sortie, et à calculer le couple (118, 218, 318) sur la base au moins du déplacement angulaire et de la force élastique fournie par la butée d'extrémité à ressort (106, 206, 306, 406, 706).

7. Agencement de moyeu (100, 200, 300, 400, 600, 700) selon l'une quelconque des revendications précédentes, comprenant en outre un troisième élément de signalisation (330, 730) disposé sur le premier dispositif d'entraînement (102, 202, 302, 602, 702) ; et
un troisième capteur (331) disposé sur l'ensemble d'arbre creux statique (101, 201, 301, 601, 701), dans lequel le troisième capteur (331) est configuré pour détecter le troisième élément de signalisation et pour émettre un troisième signal de capteur (332) ;
dans lequel l'unité de traitement (117, 217, 317) est en outre couplée au troisième capteur (331) et est configurée pour émettre un signal de jeu du moteur (333) basé au moins sur le troisième signal de capteur (332).

8. Agencement de moyeu (100, 200, 300, 400, 600, 700) selon l'une quelconque des revendications précédentes, dans lequel la butée d'extrémité à ressort (106, 206, 306, 406, 706) comprend au moins un dispositif de butée d'extrémité (435, 635-1, 635-2) comprenant un élément de butée (436, 636) sur l'élément d'entraînement (105, 205, 305, 405, 605, 705), et un ressort respectif disposé entre l'élément de butée (436, 636) et l'élément de réception (104, 204, 304, 404, 604, 704).

9. Agencement de moyeu (100, 200, 300, 400, 600, 700) selon la revendication 8, dans lequel la butée d'extrémité à ressort (106, 206, 306, 406, 706) comprend au moins deux dispositifs de butée d'extrémité (435, 635-1, 635-2) ; et
dans lequel les agencements de butées d'extrémité (435, 635-1, 635-2) sont répartis uniformément autour d'un axe de rotation de l'agencement de moyeu (100, 200, 300, 400, 600, 700).

10. Agencement de moyeu (100, 200, 300, 400, 600, 700) selon l'une quelconque des revendications 8 et 9 précédentes, dans lequel, dans le au moins un dispositif de butée d'extrémité (435, 635-1, 635-2), le ressort est un ressort à lame, dans lequel une première extrémité du ressort à lame est plus proche de l'axe de rotation de l'agencement de moyeu (100, 200, 300, 400, 600, 700) qu'une deuxième extrémité du ressort à lame.

11. Agencement de moyeu (100, 200, 300, 400, 600, 700) selon la revendication 10, dans lequel l'élément de réception (104, 204, 304, 404, 604, 704) comprend une saillie (439, 639-1, 639-2) pour chaque ressort, dans lequel la saillie (439, 639-1, 639-2) est configurée pour s'engager avec le ressort respectif ; et
dans lequel chacun des ressorts est disposé entre l'élément d'arrêt d'extrémité respectif (436, 636) et la saillie respective (439, 639-1, 639-2).

12. Agencement de moyeu (100, 200, 300, 400, 600, 700) selon l'une quelconque des revendications 10 et 11 précédentes, dans lequel le ressort à lames comprend un ressort à lames à une seule feuille ou un ressort à lames à plusieurs feuilles.

13. Agencement de moyeu (100, 200, 300, 400, 600, 700) selon l'une quelconque des revendications 10 à 12 précédentes, dans lequel l'élément de butée d'extrémité (436, 636) comprend une surface en regard du ressort qui fait face à la surface du ressort à lame, dans lequel la surface en regard du ressort est conformée selon la forme du ressort lorsqu'il est pressé contre la butée d'extrémité.

14. Agencement de moyeu (100, 200, 300, 400, 600, 700) selon l'une quelconque des revendications 10 à 13 précédentes, dans lequel l'élément de butée d'extrémité (436, 636) comprend une surface tournée vers le ressort qui fait face à la surface du ressort à lames dans un état de charge minimale du ressort à lames, dans lequel la surface tournée vers le ressort est formée de manière à s'écarter progressivement de la lame du ressort à mesure que la distance par rapport à l'axe de rotation de l'agencement de moyeu (100, 200, 300, 400, 600, 700).
